(19) Europäisches Patentamt / European Patent Office / Office européen des brevets

(11) **EP 0 890 855 B1**

(12) **FASCICULE DE BREVET EUROPEEN**

(45) Date de publication et mention
de la délivrance du brevet:
**01.07.2009 Bulletin 2009/27**

(51) Int Cl.:
**G02B 6/34** (2006.01)

(21) Numéro de dépôt: **98401732.7**

(22) Date de dépôt: **08.07.1998**

(54) **Système optique à dispersion en longueur d'onde**

Wellenlängedispersion optisches System

Wavelength dispersion optical system

(84) Etats contractants désignés:
**DE FR GB IT**

(30) Priorité: **11.07.1997 FR 9708886**

(43) Date de publication de la demande:
**13.01.1999 Bulletin 1999/02**

(73) Titulaire: **YENISTA OPTICS SA**
**22300 Lannion (FR)**

(72) Inventeur: **Laude, Jean-Pierre**
**91690 St-Cyr-La-Rivière par Saclas (FR)**

(74) Mandataire: **Maillet, Alain et al**
**Cabinet Le Guen & Maillet**
**5, place Newquay**
**B.P. 70250**
**35802 Dinard Cedex (FR)**

(56) Documents cités:
**EP-A- 0 256 809**      **FR-A- 2 543 768**
**GB-A- 2 139 374**      **US-A- 5 042 898**

- **PATENT ABSTRACTS OF JAPAN vol. 007, no. 180 (P-215), 9 août 1983 & JP 58 082219 A (NIPPON DENKI KK), 17 mai 1983**
- **LAUDE J.P.: 'STABLE MONOBLOCK WAVELENGTH DIVISION MULTIPLEXERS WITH CHANNEL SPACINGS DOWN TO 0.5 NM USABLE AS PRACTICAL WAVELENGTH REFERENCE TOOLS IN OPTICAL FIBRE COMMUNICATION SYSTEMS' PURE AND APPLIED OPTICS. JOURNAL OF THE EUROPEAN OPTICAL SOCIETY PART A vol. 3, no. 6, 01 Novembre 1994, INSTITUTE OF PHYSICS PUBLISHING, BRISTOL, GB, pages 963 - 974, XP008007162**

**Description**

La présente invention concerne un système ou multiplexeur-démultiplexeur ou un routeur en longueur d'onde à fibres optiques, susceptible d'être utilisé comme composant dans les installations de télétransmissions par fibres optiques.

On connaît déjà de tels multiplexeurs-démultiplexeurs qui ont été décrits, puis progressivement perfectionnés, en particulier dans les brevets français FR-2.543.768, FR-2.519.148, FR-2.479.981, FR-2.496.260 et dans le brevet européen EP-0.196.963.

Ce dernier document concerne plus particulièrement un multiplexeur-démultiplexeur dans lequel les fibres d'entrée et de sortie sont positionnées au voisinage immédiat du foyer d'un miroir concave. Ainsi, les flux lumineux divergents reçus des fibres d'entrée sont transformés par le miroir concave en des faisceaux de lumière parallèles qui sont adressés sur un réseau de diffraction plan, qui dirige les faisceaux parallèles en retour vers le miroir concave et qui les focalise sur les extrémités des fibres de sortie.

On a cherché à réduire les aberrations et, en particulier, les aberrations sphériques d'un tel système et c'est ainsi qu'il a été proposé un tel multiplexeur-démultiplexeur comportant un élément porte-fibre, un élément portant le réseau de diffraction, un élément intermédiaire et un élément miroir sphérique. L'élément porte-fibre met les extrémités des fibres en contact avec l'élément portant le réseau de diffraction, l'élément intermédiaire qui est en contact avec le réseau de diffraction et a le même indice optique que l'élément qui le porte, se termine par une face sphérique qui est en contact avec le miroir.

Ce dispositif donne satisfaction, a permis et permet encore de nombreuses réalisations.

Toutefois, dans certaines applications particulières, on a pu regretter l'instabilité thermique produite par la variation de l'indice des différents éléments qui le composent, avec la température et les variations des propriétés qui peuvent en résulter..

Le but de la présente invention est d'éviter ces inconvénients et donc de proposer un multiplexeur-démultiplexeur présentant les mêmes avantages que celui présenté plus haut, présentant de plus une bonne stabilité thermique.

De manière générale, l'invention concerne un système optique à dispersion destiné à être utiliser dans un domaine de longueur d'onde d'un faisceau lumineux, comportant un réseau plan porté par un support ayant un coefficient de dilatation $\varepsilon$.

Selon l'invention, il comporte une lame frontale d'indice $n_1$, transparente dans le domaine de longueur d'onde, dont l'une des faces est parallèle au plan du réseau, et telle que la variation de son indice optique $n_1$ avec la température,

$$\varepsilon + \frac{1}{n_1} \times \frac{dn_1}{dt}$$

est petit.

Dans différents modes de réalisation présentant chacun leurs avantages particuliers et susceptibles d'être utilisés selon toutes leurs combinaisons techniquement possibles :

- $\dfrac{dn_1}{dt}$ et $\varepsilon$ sont de signes contraires,

- l'autre face de la lame frontale est perpendiculaire à l'axe x, x' du faisceau,

- le support du réseau est en silice à faible dilatation et l'indice $n_1$ de la lame frontale est tel que $\dfrac{dn_1}{dt} < 0$,

- la lame frontale d'indice $n_1$ est en BK7,
- la lame frontale d'indice $n_1$ est en SF64A,
- la lame frontale d'indice $n_1$ est en SK16,
- la lame frontale d'indice $n_1$ est en LF5,
- la lame frontale est collée sur le réseau à l'aide d'une colle optique souple.
- le système comprend une deuxième lame en un matériau ayant un coefficient de dilatation voisin de celui du réseau, à faces parallèles et parallèles au réseau, et placée entre la lame frontale et le réseau,
- ladite deuxième lame est faite dans le même matériau que le support du réseau.

Ce dispositif constitue avantageusement un multiplexeur-démultiplexeur ou un routeur en longueur d'onde à fibres optiques comportant le réseau, le support, la lame frontale et un système réfléchissant, comportant lui-même un miroir et un système optique de transmission. Ledit système réfléchissant ayant un foyer, les extrémités des fibres optiques d'entrée et de sortie sont à proximité du foyer. Le système optique de transmission comporte un premier bloc portant le miroir et d'indice $n_3$, un deuxième bloc à faces parallèles d'indice $n_4$, et un troisième bloc à faces parallèles d'indice $n_5$.

Avantageusement, les premier, deuxième et troisième blocs sont chacun en silice pure.

Le deuxième bloc et le troisième bloc sont en fait une seule pièce.

L'invention sera décrite ci-après en détail en référence aux dessins annexés dans lesquels :

- la figure 1 est une représentation schématique d'un spectromètre mettant en oeuvre le système optique de l'invention ;
- la figure 2 est une représentation schématique d'un multiplexeur-démultiplexeur réalisé selon un premier mode de réalisation de l'invention ;
- la figure 3 est une représentation schématique d'un multiplexeur-démultiplexeur réalisé selon un deuxième mode de réalisation de l'invention.

Il a été constaté que les dispositifs dispersifs à réseau et, en particulier à réseau plan, sont sensibles aux variations thermiques qui peuvent modifier leurs propriétés et affecter leurs performances.

Pour éviter ces inconvénients, il était apparu jusqu'à présent nécessaire de stabiliser la température de ces dispositifs, ce qui engendre des contraintes de coût, de volume et d'encombrement relativement importantes.

Afin d'éviter ces inconvénients, il est proposé ici d'utiliser un réseau formé sur un support en silice à faible dilatation. D'une manière plus générale, on pourra réaliser un réseau pour la mise en oeuvre de l'invention sur un matériau à coefficient d'expansion ou de dilatation $\varepsilon$ faible, associé à une lame frontale dont la variation d'indice en fonction de la température $\dfrac{dn_1}{dt}$ est également faible

Les variations de température produisent sur le système optique à dispersion de l'invention deux effets distincts.

Une élévation de température du support du réseau entraîne sa dilatation et donc l'augmentation du pas a du réseau.

D'autre part, la variation $\dfrac{dn_1}{dt}$ de l'indice optique $n_1$ de la lame frontale 3, en fonction de la température, modifie ces propriétés réfractives.

On a montré qu'il est possible de minimiser cette variation des propriétés du système optique à dispersion en minimisant la quantité

$$\varepsilon + \frac{1}{n_1} \times \frac{dn_1}{dt}.$$

De manière générale, cela peut être réalisé en minimisant chacune de ces quantités, $\varepsilon$ d'une part, et $\dfrac{dn_1}{dt}$ ou $\dfrac{1}{n_1} \times \dfrac{dn_1}{dt}$ d'autre part, leur somme étant alors également faible.

Il est également possible de choisir des matériaux dont le coefficient de dilatation $\varepsilon$ d'une part et les variations d'indice en fonction de la température $\dfrac{dn_1}{dt}$ sont de signes opposés.

On obtient alors une somme $\varepsilon + \dfrac{1}{n_1} \times \dfrac{dn_1}{dt}$ faible.

Avec un support 2 du réseau 1 en silice, de préférence choisi pour avoir une faible dilatation ε, on peut utiliser pour la réalisation de la lame frontale 3, l'un des verres ayant une variation de l'indice en fonction de la température faible tels que, par exemple, les verres BK7, SF64A, SK16 ou LF5.

Ces désignations sont celles utilisées par la Société SCHOTT. Bien entendu, des matériaux de mêmes propriétés produits par d'autres sociétés sous d'autres dénominations peuvent également être utilisés à cet effet. Il existe des tables de concordance permettant d'identifier aisément les références et dénominations utilisées par les différents fabricants.

Lorsque ε est positif et les variations $\dfrac{dn_l}{dt}$ négatives comme pour les verres BaK2, LF5, SF64A, on obtient de particulièrement bons résultats.

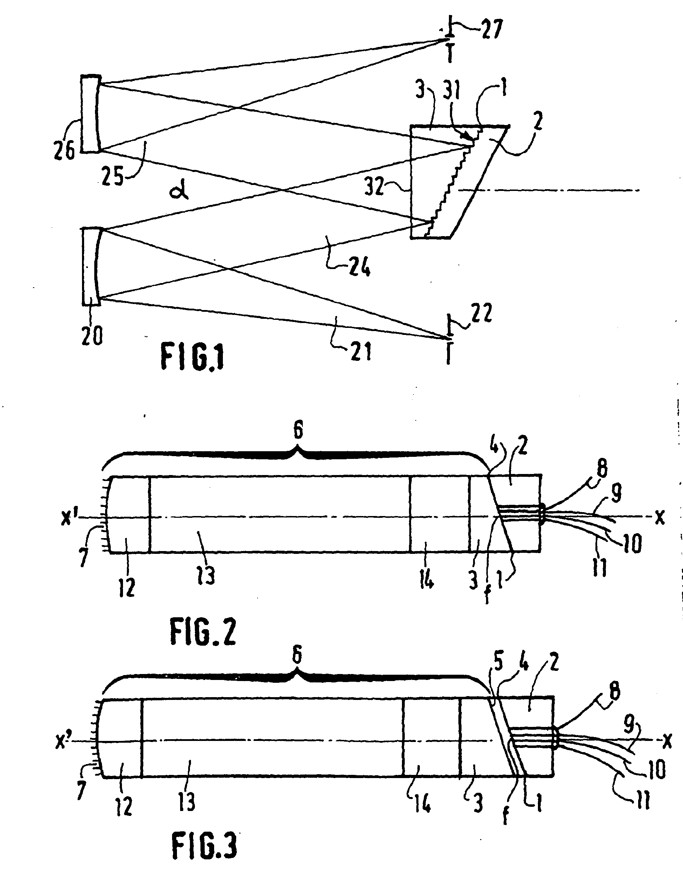

Le premier exemple de réalisation est celui général d'un spectromètre tel que représenté sur la figure 1. Le réseau 1 porté par le support 2 reçoit un faisceau lumineux d'entrée 21 provenant d'une fente d'entrée 22, placée au foyer d'une optique 23, produisant un faisceau parallèle 24. Par dispersion, le réseau 1 renvoie un faisceau parallèle 25 adressé par une optique 26 sur une fente de sortie 27 sélectionnant une longueur d'onde particulière en fonction de sa position dans son plan.

La lame frontale 3 comporte une face 31 parallèle au plan du réseau 1 et une deuxième face 32, perpendiculaire à l'axe du système, et approximativement perpendiculaire dans les réalisations réelles, à la fois au faisceau incident 24 et au faisceau réfléchi 25. En effet, pour plus de clarté, les faisceaux 24 et 25 ont été représentés sur la figure 1 comme formant un angle α relativement important. Dans les réalisations, cet angle est faible permettant la réalisation de la condition indiquée plus haut.

Cette disposition a permis différentes réalisations dans lesquelles on a obtenu un multiplexeur-démultiplexeur tel que représenté sur la figure 2, avec un tirage total de 100 mm environ et un rayon de courbure du miroir sphérique de 239 mm.

On a utilisé un réseau de 600 traits par millimètre et à l'exception de la lame frontale, les autres éléments, les blocs 1, 2 et 3, ainsi que le support de réseau, ont été réalisés en silice pure qui a un coefficient de dilatation ε de 5,2 $10^{-7}$ $K^{-1}$ entre 5 et 35˚C.

Les différentes lames frontales qui ont été expérimentées, sont indiquées dans le tableau suivant :

| Lame frontale | Exemple 1 | Exemple 2 | Exemple 3 | Exemple 4 | Exemple 5 | Exemple 6 | Exemple 7 |
|---|---|---|---|---|---|---|---|
| Matériau | BaK2 | SF64A | LF5 | BK7 | BaK2 | LF5 | LF5 |
| Indice de réfraction | 1,5237 | 1,6817 | 1,56594 | 1,50056 | 1,52307 | 1,55951 | 1,56010 |
| $\dfrac{l}{n_l} \times \dfrac{dn_l}{dt}$ | (à λ=1,54μm) ≅ - 3,5 $10^{-7}$ | (à λ=1,06μm) ≅ - 3,2 $10^{-7}$ | (à λ=1,06μm) - 4,4 $10^{-7}$ | (à λ= 1,557μm) + 5,7 $10^{-7}$ | (à λ=1,6μm) - 3,5 $10^{-7}$ | (à λ=1,55μm) -5,34$10^{-7}$(à 25˚C) | (à λ=1,50μm) - 5,27 $10^{-7}$ (à 25˚C) |

On obtient ainsi, pour ces exemples, une valeur pour l'expression $\varepsilon + \dfrac{l}{n_l} \times \dfrac{dn_l}{dt}$ faible et bien inférieure à celle que l'on obtiendrait en utilisant des composants qui soient tous réalisés dans le même matériau, par exemple en silice.

**Revendications**

**1.** Système optique à dispersion, destiné à être utilisé dans un domaine de longueur d'onde d'un faisceau, constituant un spectromètre, ledit système comportant:

une fente d'entrée (22) au foyer d'une optique d'entrée (23),

- un réseau (1) plan formé sur un support (2), le matériau constituant le support (2) du réseau (1) ayant un coefficient de dilatation ε entraînant une augmentation du pas du réseau lors d'une augmentation de la température, et

une fente de sortie (27) au foyer d'une optique de sortie (26).
**caractérisé en qu'**il comporte,

- placée devant le réseau (1) portée par son support (2), une lame frontale (3) ayant deux faces planes et transparente dans le domaine de longueur d'onde, l'une de ces faces étant parallèle au plan du réseau (1), et qui a un indice $n_1$ dont la variation en température modifie les propriétés réfractives,

ladite lame frontale (3) étant réalisée dans un matériau solide différent du matériau constituant le support (2) du réseau (1), en ce que l'autre face de la lame frontale (3) est approximativement perpendiculaire au faisceau incident (2) issu de l'optique d'entée (22) et au faisceau (25) renvoyé par le réseau (1),

et ce que ledit matériau de ladite lame frontrale (3) est choisi de manière que la somme $\varepsilon = \dfrac{1}{n_1} \times \dfrac{dn_1}{dt}$

soit minimisée, les deux termes étant de signes opposés.

2. Système optique selon la revendication 1, **caractérisé en ce que** la lame frontale est en verre.

3. Système optique selon l'une des revendications 1 à 2, **caractérisé en ce que** le support (2) du réseau (1) est en silice à faible dilatation.

4. Système optique selon l'une des revendications 1 à 3, **caractérisé en ce que** la lame frontale (3) d'indice $n_1$ est en SF64A.

5. Système optique selon l'une des revendications 1 à 3, **caractérisé en ce que** la lame frontale (3) d'indice $n_1$ est en BaK2.

6. Système optique selon l'une des revendications 1 à 3, **caractérisé en ce que** la lame frontale (3) d'indice $n_1$ est en SK16.

7. Système optique selon l'une des revendications 1 à 3, **caractérisé en ce que** la lame frontale (3) d'indice $n_1$ est en LF5.

8. Système optique selon l'une quelconque des revendications 1 à 7 **caractérisé en ce que** la lame frontale (3) d'indice $n_1$ est collée sur le réseau (1) à l'aide d'une colle (4) optique souple.

9. Système optique à dispersion, destiné à être utilisé dans un domaine de longueur d'onde d'un faisceau, constituant un multiplexer-démultiplexeur ou un routeur en longueur d'onde à fibres optiques (8, 9, 10, 11) comportant

- un réseau (1) plan formé sur un support (2), le matériau constituant le support (2) du réseau (1) ayant un coefficient de dilatation entraînant une augmentation du pas du du réseau lors d'une augmentation de la température,
- un premier bloc (12) portant, sur sa face opposée audit réseau (1), un miroir (7),
- un second bloc (13) à faces parallèles en contract avec ledit premier bloc (12), les extremités des fibres d'entrée (8) et de sortie (9, 10, 11) étant à proximité du foyer (7) du miroir (7)

**caractérisé en ce qu'**il comporte en outre

- entre ledit réseau (1) et ledit second bloc (13) et en contact avec ledit bloc (13), une lame frontale (3) ayant deux faces planes et transparente dans le domaine de longueur d'onde, l'une de ces faces étant parallèle au plan du réseau (1), et qui a un indice $n_1$ dont la variation en température modifie les propriétés réfractives,
- ladite lame frontale (3) est réalisée dans un matériau solide différent du matériau constituant le support (2) du réseau (1), **en ce que** l'autre face de la lame frontale (3) est perpendiculaire à l'axe optique (x', x) du dudit

**EP 0 890 855 B1**

système optique et **en ce que** la somme $\varepsilon + \dfrac{1}{n_1} \times \dfrac{dn_1}{dt}$ est minimisée par rapport au cas où le système optique à dispersion est réalisé dans le même matériau.

**10.** Système optique selon la revendication 9, **caractérisé en ce que** la lame frontale est en verre.

**11.** Système optique selon l'une des revendications 9 ou 10, **caractérisé en ce que** dans le domaine de longueur d'onde, $\dfrac{dn_1}{dt}$ et $\varepsilon$ sont de signes contraires.

**12.** Système optique selon l'une des revendications 9 à 11, **caractérisé en ce que** le support (2) du réseau (1) est en silice à faible dilatation et que l'indice optique $n_1$ de la lame frontale (3) est tel que $\dfrac{dn_1}{dt} < 0$.

**13.** Système optique selon l'une quelconque des revendications 9 à 11, **caractérisé en ce que** la lame frontale (3) d'indice $n_1$ est en BK7.

**14.** Système optique selon l'une des revendications 9 à 12, **caractérisé en ce que** la lame frontale (3) d'indice $n_1$ est en SF64A.

**15.** Système optique selon l'une des revendications 9 à 12, **caractérisé en ce que** la lame frontale (3) d'indice $n_1$ est en BaK2.

**16.** Système optique selon l'une des revendications 9 à 12, **caractérisé en ce que** la lame frontale (3) d'indice $n_1$ est en SK16.

**17.** Système optique selon l'une des revendications 9 à 12, **caractérisé en ce que** la lame frontale (3) d'indice $n_1$ est en LF5.

**18.** Système optique selon l'une quelconque des revendications 9 à 17 **caractérisé en ce que** la lame frontale (3) d'indice $n_1$ est collée sur le réseau (1) à l'aide d'une colle (4) optique souple.

**19.** Système optique selon l'une quelconque des revendications 9 à 18 **caractérisé en ce qu'**il comprend une deuxième lame (5) en un matériau ayant un coefficient de dilatation voisin de celui du réseau, à faces parallèles entre elles et parallèles au réseau, placée entre la lame frontale (3) et le réseau (1).

**20.** Système optique selon la revendication 19, **caractérisé en ce que** la deuxième lame (5) est faite dans le même matériau que le support (2) du réseau (1)

**21.** Système optique selon la revendication 9 à 20, **caractérisé en ce que** le premier bloc (12) est en silice pure.

**22.** Système optique selon une des revendications 1 à 21, **caractérisé en ce que** le deuxième bloc (13, 14) est constitué de deux blocs.

**23.** Système optique selon la revendication 22, **caractérisé en ce qu'**au moins un des deux blocs (13, 14) est en silice pure.

**Claims**

**1.** Optical dispersion system which is intended to be used over a range of wavelengths of a beam and which forms a spectrometer, the said system comprising:

- an entry slit (22) at the focus point of an input optical means (23),

- a plane grating (1) formed on a substrate (2), the material which forms the substrate (2) of the grating (1) having an expansion coefficient ε which causes an increase in the pitch of the grating when there is an increase in temperature, and
- an exit slit (27) at the focus point of an output optical means (26),

**characterised in that** it comprises,
positioned in front of the grating (1) carried by the substrate (2) thereof, a front plate (3), which front plate (3) has two plane faces and is transparent in the wavelength range, one of the said faces being parallel to the plane of the grating (1), and has an index n1 whose variation with temperature changes the refractive properties,
the said front plate (3) being made from a solid material which is different from the material forming the substrate (2) of the grating (1),
**in that** the other face of the front plate (3) is approximately perpendicular to the incident beam (2) coming from the input optical means (22) and to the beam (25) which is returned by the grating (1), and

**in that** the said material of the said front plate (3) is selected in such a way that the sum $\varepsilon = \dfrac{1}{n_1} \times \dfrac{dn_1}{dt}$ is minimised, the two terms being of opposite signs.

2. Optical system according to claim 1, **characterised in that** the front plate is made of glass.

3. Optical system according to either of claims 1 and 2, **characterised in that** the substrate (2) of the grating (1) is made of low-expansion silica.

4. Optical system according to one of claims 1 to 3, **characterised in that** the front plate (3) of index $n_1$ is made of SF64A.

5. Optical system according to one of claims 1 to 3, **characterised in that** the front plate (3) of index $n_1$ is made of BaK2.

6. Optical system according to one of claims 1 to 3, **characterised in that** the front plate (3) of index $n_1$ is made of SK16.

7. Optical system according to one of claims 1 to 3, **characterised in that** the front plate (3) of index $n_1$ is made of LF5.

8. Optical system according to any one of claims 1 to 7, **characterised in that** the front plate (3) of index $n_1$ is adhesive-bonded to the grating (1) by means of a flexible optical adhesive (4).

9. Optical dispersion system which is intended to be used over a range of wavelengths of a beam and which forms a wavelength multiplexer-demultiplexer or router employing optical fibres (8, 9, 10, 11), comprising:

  - a plane grating (1) formed on a substrate (2), the material which forms the substrate (2) of the grating (1) having an expansion coefficient ε which causes an increase in the pitch of the grating when there is an increase in temperature,
  - a first block (12) carrying a mirror (7) on its opposite face from the said grating (1),
  - a second, parallel-faced, block (13) which is in contact with the said first block (12), the ends faces of the input (8) and output (9, 10, 11) fibres being in the vicinity of the focus (f) of the mirror (7),

  **characterised in that** it also comprises,
  between the said grating (1) and the said second block (3) and in contact with the said block (13), a front plate (3), which front plate (3) has two plane faces and is transparent in the wavelength range, one of the said faces being parallel to the plane of the grating (1), and has an index $n_1$ whose variation with temperature changes the refractive properties,
  the said front plate (3) being made from a solid material which is different from the material which forms the substrate (2) of the grating (1), and
  **in that** the other face of the front plate (3) is perpendicular to the optical axis (x', x) of the said optical system, and

  **in that** the sum $\varepsilon = \dfrac{1}{n_1} \times \dfrac{dn_1}{dt}$ is minimised in comparison with the case where the optical dispersion system is made of the same material.

10. Optical system according to claim 9, **characterised in that** the front plate is made of glass.

11. Optical system according to either of claims 9 and 10, **characterised in that**, in the range of wavelengths, $\frac{dn_1}{dt}$ and $\varepsilon$ are of opposite signs.

12. Optical system according to one of claims 9 to 11, **characterised in that** the substrate (2) of the grating (1) is made of low-expansion silica and **in that** the optical index $n_1$ of the front plate (3) is such that $\frac{dn_1}{dt} < 0$.

13. Optical system according to any one of claims 9 to 11, **characterised in that** the front plate (3) of index $n_1$ is made of BK7.

14. Optical system according to any one of claims 9 to 12, **characterised in that** the front plate (3) of index $n_1$ is made of SF64A.

15. Optical system according to one of claims 9 to 12, **characterised in that** the front plate (3) of index $n_1$ is made of BaK2.

16. Optical system according to one of claims 9 to 12, **characterised in that** the front plate (3) of index $n_1$ is made of SK16.

17. Optical system according to one of claims 9 to 12, **characterised in that** the front plate (3) of index $n_1$ is made of LF5.

18. Optical system according to any one of claims 9 to 17, **characterised in that** the front plate (3) of index $n_1$ is adhesive-bonded to the grating (1) by means of a flexible optical adhesive (4).

19. Optical system according to any one of claims 9 to 18, **characterised in that** it comprises a second plate (5) which is made of a material having a coefficient of expansion close to that of the grating, which has mutually parallel faces which are parallel to the grating , and which is positioned between the front plate (3) and the grating (1).

20. Optical system according to claim 19, **characterised in that** the second plate (5) is made of the same material as the substrate (2) of the grating (1).

21. Optical system according to claims 9 to 20, **characterised in that** the first block (12) is made of pure silica.

22. Optical system according to one of claims 1 to 21, **characterised in that** the second block (13, 14) is formed by two blocks.

23. Optical system according to claim 22, **characterised in that** at least one of the two blocks (13, 14) is made of pure silica.


**Patentansprüche**

1. Optisches Dispersionssystem, welches dazu bestimmt ist, in einem Wellenlängenbereich eines Bündels verwendet zu werden, und welches ein Spektrometer darstellt, wobei das System umfaßt:

   - einen Eintrittsspalt (22) im Brennpunkt einer Eintrittsoptik (23),
   - ein auf einem Träger (2) ausgebildetes Gitter (1), wobei das den Träger (2) des Gitters (1) bildende Material einen Ausdehnungskoeffizienten $\varepsilon$ aufweist, der eine Vergrößerung der Maschenweite des Gitters bei einer Erhöhung der Temperatur zur Folge hat, und
   - einen Austrittsspalt (27) im Brennpunkt einer Austrittsoptik (26),

   **dadurch gekennzeichnet, dass** es eine vor dem Gitter (1) angeordnete, von dessen Träger (2) getragene Stirnplatte (3) umfasst, die zwei ebene Seiten aufweist und in dem Wellenlängenbereich durchlässig ist, wobei die eine dieser Seiten zur Ebene des Gitters (1) parallel ist, und welche einen Index $n_1$ aufweist, dessen Änderung in Abhängigkeit von der Temperatur die Brechungseigenschaften ändert,
wobei die Stirnplatte (3) aus einem festen Material hergestellt ist, das von dem Material verschieden ist, aus dem der Träger (2) des Gitters (1) besteht, **dadurch**, dass die andere Seite der Stirnplatte (3) annähernd senkrecht zu dem einfallenden Bündel (2) von der Eintrittsoptik (22) und zu dem durch das Gitter (1) zurückgestrahlten Bündel (25) ist, und **dadurch**, dass das Material der Stirnplatte (3) derart gewählt ist, dass die Summe $\varepsilon + \dfrac{1}{n_1} \times \dfrac{dn_1}{dt}$ minimiert wird, wobei die beiden Terme entgegengesetzte Vorzeichen haben.

2. Optisches System nach Anspruch 1, **dadurch gekennzeichnet, dass** die Stirnplatte aus Glas besteht.

3. Optisches System nach einem der Ansprüche 1 bis 2, **dadurch gekennzeichnet, dass** der Träger (2) des Gitters (1) aus Siliziumdioxid mit geringer Wärmedehnung besteht.

4. Optisches System nach einem der Ansprüche 1 bis 3, **dadurch gekennzeichnet, dass** die Stirnplatte (3) mit dem Index $n_1$ aus SF64A besteht.

5. Optisches System nach einem der Ansprüche 1 bis 3, **dadurch, gekennzeichnet, dass** die Stirnplatte (3) mit dem Index $n_1$ aus BaK2 besteht.

6. Optisches System nach einem der Ansprüche 1 bis 3, **dadurch gekennzeichnet, dass** die Stirnplatte (3) mit dem Index $n_1$ aus SK16 besteht.

7. Optisches System nach einem der Ansprüche 1 bis 3, **dadurch gekennzeichnet, dass** die Stirnplatte (3) mit dem Index $n_1$ aus LF5 besteht.

8. Optisches System nach einem der Ansprüche 1 bis 7, **dadurch gekennzeichnet, dass** die Stirnplatte (3) mit dem Index $n_1$ mit Hilfe eines flexiblen optischen Klebstoffes (4) auf das Gitter (1) geklebt ist.

9. Optisches Dispersionssystem, welches dazu bestimmt ist, in einem Wellenlängenbereich eines Bündels verwendet zu werden, und welches einen Wellenllängen-Multiplexer-Demultiplexer oder einen Wellenlängen-Router für optische Fasern (8, 9, 10, 11) darstellt, welches umfasst ;

- ein auf einem Träger (2) ausgebildetes Gitter (1), wobei das den Träger (2) des Gitters (1) bildende Material einen Ausdehnungskoeffizienten $\varepsilon$ aufweist, der eine Vergrößerung der Maschenweite des Gitters bei einer Erhöhung der Temperatur zur Folge hat,
- einen ersten Block (12), welcher auf seiner dem Gitter (1) gegenüberliegenden Seite einen Spiegel (7) trägt,
- einen zweiten Block (13) mit parallelen Seiten, der sich mit dem ersten Block (12) in Kontakt befindet,
wobei die Enden der Eingangsfasern (8) und Ausgangsfasern (9, 10, 11) in der Nähe des Brennpunktes (f) des Spiegels (7) eintreten,
**dadurch gekennzeichnet, dass** es außerdem umfasst
- eine zwischen dem Gitter (1) und dem zweiten Block (13) und in Kontakt mit dem Block (13) befindliche Stirnplatte (3), die zwei ebene Seiten aufweist und in dem Wellenlängenbereich durchlässig ist, wobei die eine dieser Seiten zur Ebene des Gitters (1) parallel ist, und welche einen Index $n_1$ aufweist, dessen Änderung in Abhängigkeit von der Temperatur die Brechungseigenschaften ändert,

wobei die Stirnplatte (3) aus einem festen Material hergestellt ist, das von dem Material verschieden ist, aus dem der Träger (2) des Gitters (1) besteht, **dadurch**, das die andere Seite der Stirnplatte (3) annähernd senkrecht zur optischen Achse (x', x) des optischen Systems ist, und **dadurch**, dass die Summe $\varepsilon + \dfrac{1}{n_1} \times \dfrac{dn_1}{dt}$ minimiert wird, bezogen auf den Fall, in dem das optische Dispersionssystem aus demselben Material hergestellt ist.

10. Optisches System nach Anspruch 9, **dadurch gekennzeichnet, dass** die Stirnplatte aus Glas besteht.

11. Optisches System nach einem der Ansprüche 9 oder 10, **dadurch gekennzeichnet, dass** in dem Wellenlängen-

bereich $\dfrac{dn_1}{dt}$ und ε entgegengesetzte Vorzeichen haben.

**12.** Optisches System nach einem der Ansprüche 9 bis 11, **dadurch gekennzeichnet, dass** der Träger (2) des Gitters (1) aus Siliziumdioxid mit geringer Wärmedehnung besteht und dass der optische Index $n_1$ der Stirnplatte (3) so beschaffen ist, dass $\dfrac{dn_1}{dt} < 0$ ist.

**13.** Optisches System nach einem der Ansprüche 9 bis 11, **dadurch gekennzeichnet, dass** die Stirnplatte (3) mit dem Index $n_1$ aus BK7 besteht.

**14.** Optisches System nach einem der Ansprüche 9 bis 12, **dadurch gekennzeichnet, dass** die Stirnplatte (3) mit dem Index $n_1$ aus SF64A besteht.

**15.** Optisches System nach einem der Ansprüche 9 bis 12, **dadurch gekennzeichnet, dass** die Stirnplatte (3) mit dem Index $n_1$ aus BaK2 besteht.

**16.** Optisches System nach einem der Ansprüche 9 bis 12, **dadurch gekennzeichnet, dass** die Stirnplatte (3) mit dem Index $n_1$ aus SK16 besteht.

**17.** Optisches System nach einem der Ansprüche 9 bis 12, **dadurch gekennzeichnet, dass** die Stirnplatte (3) mit dem Index $n_1$ aus LF5 besteht.

**18.** Optisches System nach einem der Ansprüche 9 bis 17, **dadurch gekennzeichnet, dass** die Stirnplatte (3) mit dem Index $n_1$ mit Hilfe eines flexiblen optischen Klebstoffes (4) auf das Gitter (1) geklebt ist.

**19.** Optisches System nach einem der Ansprüche 9 bis 18, **dadurch gekennzeichnet, dass** es eine zweite Platte (5) aus einem Material mit einem Ausdehnungskoeffizienten, der demjenigen des Gitters ähnlich ist, mit zueinander parallelen und zu dem Gitter parallelen Seiten umfasst, die zwischen der Stirnplatte (3) und dem Gitter (1) angeordnet ist.

**20.** Optisches System nach Anspruch 19, **dadurch gekennzeichnet, dass** die zweite Platte (5) aus demselben Material wie der Träger (2) des Gitters (1) hergestellt ist.

**21.** Optisches System nach einem der Ansprüche 9 bis 20, **dadurch gekennzeichnet, dass** der erste Block (12) aus reinem Siliziumdioxid besteht.

**22.** Optisches System nach einem der Ansprüche 1 bis 21, **dadurch gekennzeichnet, dass** der zweite Block (13, 14) aus zwei Blöcken besteht.

**23.** Optisches System nach Anspruch 22, **dadurch gekennzeichnet, dass** mindestens einer der zwei Blöcke (13, 14) aus reinem Siliziumdioxid besteht.

FIG.1

FIG.2

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2543768
- FR 2519148
- FR 2479981
- FR 2496260
- EP 0196963 A